# EUROPEAN PATENT APPLICATION

(11) **EP 2 930 011 A1**
(43) Date of publication of application: **14.10.2015**
(21) Application number: 14400024.7
(22) Date of filing: 07.04.2014
(51) Int. Cl.: B29C 73/10, B29C 73/02, B29C 73/06, B29C 73/26

(54) **A method of repairing a sandwich component having a honeycomb core with an associated core height**

(71) Applicant: AIRBUS HELICOPTERS DEUTSCHLAND GmbH, 86609 Donauwörth (DE)
(72) Inventor: Vogel, Dominik, D-86462 Langweid (DE); Strohmaier, Thorsten, D-86511 Schmiechen (DE); Joachim, Thomas, D-86156 Augsburg (DE)
(74) Representative: GPI & Associés

(57) **Abstract**

The invention is related to a method of repairing a sandwich component (1) having a honeycomb core (2) with an associated core height (3e), which is arranged between a first cover plate (1b) and a second cover plate (1d), said sandwich component (1) comprising a damaged area (3) including a cover plate crack (3a) of the first cover plate (1b) and a deterioration (3b) of said honeycomb core (2) adjacent to said cover plate crack (3a), wherein at least one repair patch is introduced into said honeycomb core (2) through said cover plate crack (3a). The invention is further related to such a repair patch.

## Description

The invention is related to a method of repairing a sandwich component having a honeycomb core with an associated core height, which is arranged between a first cover plate and a second cover plate, said sandwich component comprising a damaged area including a cover plate crack of the first cover plate and a deterioration of said honeycomb core adjacent to said cover plate crack, said method comprising the features of claim 1.

In the field of aviation, weight optimization issues are crucial so that various aircraft components are implemented in sandwich construction in order to reduce their weight. Such components are generally referred to as "sandwich components" and may be comprised of plural differing materials, each having associated characteristics and advantages. By combining these plural differing materials into a single sandwich component, the single sandwich component can be provided at least to some extent with the characteristics and advantages of all combined materials.

By way of example, a suitable sandwich component can be used to implement a cabin floor of a helicopter, which is mounted to the helicopter's fuselage via frame and stringers thereof. Such a cabin floor may e.g. comprise a honeycomb core with an associated core height that is arranged between an upper cover plate and a lower cover plate, wherein at least the lower cover plate is attached to the fuselage. The cabin floor may further be provided with so-called anchor points that are intended to enable fixation of associated equipment, such as e.g. seat retainers, to the cabin floor, i.e. the upper cover plate. The associated equipment should, thereby, be mounted to the cabin floor such that it is flat and evenly positioned on the upper cover plate.

In such a configuration, the cabin floor has a predefined thickness that is at least essentially determined by the associated core height of the honeycomb core in order to provide the cabin floor with a required bearing strength and stiffness. The honeycomb core is usually glued to the upper and lower cover plates and implemented as lightweight as possible in order to reduce the overall weight of the cabin floor. In intermediate areas of the honeycomb core as well as between the honeycomb core and the anchor points, a suitable filling material can be introduced flexibly.

The excessive use of the helicopter and, more specifically, of its cabin floor in operation can lead to damages of the cabin floor that need to be repaired in order to guarantee a reliable and secure continued utilization of the helicopter. Such damages usually exhibit a cover plate crack of the upper cover plate of the sandwich component that implements the cabin floor, as well as a deterioration of the honeycomb core adjacent to the cover plate crack, which together define a damaged area of the sandwich component. The damaged area can be repaired either starting from the upper cover plate side or starting from the lower cover plate side of the sandwich component.

In order to repair such a damaged area starting from the upper cover plate side, the damaged area is extensively drilled out, whereby a large-scale hole is created in the upper cover plate around the cover plate crack and also in the honeycomb core, whereby the deteriorated part of the honeycomb core is removed. Then, a repair patch and a doubler patch are prepared, mounted to each other and glued to the upper cover plate such that the repair patch fills out the cover plate crack and that the doubler patch is positioned at least partly on the upper cover plate in order to retain the repair patch in the cover plate crack. Subsequently, a suitable filling material is introduced into the honeycomb core through corresponding filling and venting openings provided in the repair and doubler patches to fill out the honeycomb core in the region of its removed deteriorated section.

However, this repair method inevitably leads to a thickening or swelling of the sandwich component due to the application of the doubler patch. More specifically, as the doubler patch is positioned on the upper cover plate, i.e. on its outer face side that faces away from the honeycomb core, the sandwich component is thickened by the thickness of the doubler patch, so that a flat and even positioning of equipment on the cabin floor defined by the sandwich component can be rendered impossible.

The document JP 2013-146909 A describes an alternative repair method of a damaged area of a sandwich component starting from its upper cover plate side. This repair method comprises the following steps, after having extensively drilled out the damaged area and removed the deteriorated section of the honeycomb core to create a repair gap in the upper cover plate and the honeycomb core: Initially, a repair honeycomb core having a planarized end face to which a repair patch is to be bonded is inserted into the repair gap and the repair patch is disposed on the planarized end face of the repair honeycomb core with a film adhesive there between. Then, the repair honeycomb core is bonded with the existing honeycomb sandwich structural body and the repair patch and, subsequently, the repair patch is cured in a reduced-pressure atmosphere accompanied by heating in order to close the extensively drilled out upper cover plate.

However, curing the repair patch in a reduced-pressure atmosphere accompanied by heating in the repair gap is a complex and time-consuming task. Furthermore, the repair patch must be fitted exactly and precisely into the repair gap created in the upper cover plate. Otherwise, the repair patch may lead to the above described thickening or swelling of the sandwich component. Moreover, if the repair patch is not fitted exactly and precisely into the repair gap created in the upper cover plate, an interruption of a required distribution of forces in the upper cover plate may occur, thus creating an instable location in the upper cover plate that is prone to further damages.

In contrast thereto, in order to repair a damaged area of a sandwich component starting from the lower cover plate side of the sandwich component, the lower cover plate and the damaged area are extensively drilled out, whereby a large-scale hole is created in the lower cover plate and the honeycomb core, and whereby the deteriorated section of the honeycomb core is removed. Furthermore, the upper cover plate is drilled out around the cover plate crack such that an upper repair patch can be mounted to the upper cover plate. More specifically, the upper repair patch is attached to an upper doubler patch which is glued to a face side of the upper cover plate that faces the honeycomb core such that the upper repair patch fills out the drilled out cover plate crack and that the upper doubler patch closes the sandwich component at the upper cover plate. Then, a lower repair patch and a lower doubler patch are prepared, mounted to each other and glued to the lower cover plate on an outer face side of the lower cover plate that faces away from the honeycomb core. The lower repair patch fills out the lower cover plate in the drilled out region and the lower doubler patch is positioned at least partly on the lower cover plate in order to retain the lower repair patch at the lower cover plate. Subsequently, a suitable filling material is introduced into the honeycomb core through corresponding filling and venting openings provided in the lower repair and doubler patches to fill out the honeycomb core in the region of its removed deteriorated section.

However, this repair method requires drilling through the previously undamaged lower cover plate and, furthermore, inevitably leads to a thickening or swelling of the sandwich component due to the application of the lower doubler patch. More specifically, as the lower doubler patch is positioned on the lower cover plate, i.e. on its outer face side that faces away from the honeycomb core, the sandwich component is thickened by the thickness of the lower doubler patch.

Another drawback of the repair method that is carried out starting from the lower cover plate side of the sandwich component arises if the sandwich component implements the cabin floor as described above, as in this case the cabin floor needs to be removed from the helicopter prior to repairing, so that the lower cover plate becomes accessible. Then, however, if the sandwich component is thickened on the lower cover plate side, the sandwich component can no more be positioned flat and evenly on the frame and stringers of the helicopters' fuselage, so that a secure and reliable mounting of the sandwich component as cabin floor can be rendered impossible.

It is, therefore, an object of the present invention to provide a method of repairing a sandwich component having a honeycomb core with an associated core height, which is arranged between a first cover plate and a second cover plate, that overcomes the above described drawbacks and that allows to repair the sandwich component without leading to a thickening or swelling thereof.

This object is solved by a method of repairing a sandwich component with the features of claim 1.

More specifically, according to the invention a method of repairing a sandwich component having a honeycomb core with an associated core height, which is arranged between a first cover plate and a second cover plate, is provided. Said sandwich component comprises a damaged area including a cover plate crack of the first cover plate and a deterioration of said honeycomb core adjacent to said cover plate crack. Said method comprises at least the steps of creating a repair opening in said first cover plate with a first maximum diameter that is at least equal to a second maximum diameter associated with said cover plate crack; creating a recess in said honeycomb core in prolongation to said repair opening, said recess having said first maximum diameter and a depth that is at least equal to a maximum depth of said deterioration of said honeycomb core; enlarging said recess in said honeycomb core for creating a repair cavity with a third maximum diameter that is greater than said first maximum diameter; introducing a first repair patch through said repair opening into said repair cavity, said first repair patch having a fourth maximum diameter that is at least greater than the first maximum diameter; and attaching said first repair patch inside said repair cavity in the region of said repair opening to said first cover plate, such that said first repair patch closes said repair opening at least partly.

The inventive method of repairing a sandwich component having a damaged area allows mounting respective doubler patches exclusively to the interior of the sandwich component, i.e. in the area of the honeycomb core. Thus, a thickening or swelling of the sandwich component on its outer face sides due to arrangement of the doubler patches on the outside of the sandwich component can be avoided.

According to one aspect, the sandwich component is only repaired starting from its damaged upper cover plate. Thus, the undamaged lower cover plate is not drilled through and, accordingly, kept intact and undamaged.

Preferably, by drilling through the upper cover plate, a bore with a predefined opening diameter can be created. This bore can easily be closed with a pre-fabricated repair patch that has said predefined opening diameter.

Advantageously, the inventive method of repairing a sandwich component can be performed without a required repositioning of the sandwich component. In other words, if the sandwich component implements, for instance, a cabin floor of a helicopter, this cabin floor does not need to be removed from the helicopter in order to allow reparation thereof.

According to a preferred embodiment, the method further comprises the step of introducing a filling material through a through opening provided in said first repair patch into said repair cavity, said through opening having a fifth maximum diameter that is smaller than said first maximum diameter.

According to a further preferred embodiment, the method additionally comprises the step of arranging a second repair patch having a sixth maximum diameter that corresponds to the first maximum diameter in said repair opening, and attaching said second repair patch at least to said first repair patch.

According to a further preferred embodiment, the method additionally comprises the step of removing any existing adhesive residues in the region of said repair opening and said repair cavity prior to introducing said first repair patch through said repair opening into said repair cavity.

According to a further preferred embodiment, said step of attaching said first repair patch inside said repair cavity in the region of said repair opening to said first cover plate comprises gluing said first repair patch to said first cover plate.

According to a further preferred embodiment, said step of attaching said second repair patch at least to said first repair patch comprises gluing said second repair patch at least partly to said first repair patch.

According to a further preferred embodiment, said steps of creating said repair opening in said first cover plate with said first maximum diameter and creating said recess in said honeycomb core in prolongation to said repair opening are performed by boring said repair opening and said recess using a drill.

According to a further preferred embodiment, said step of enlarging said recess in said honeycomb core for creating said repair cavity comprises milling said repair cavity using a milling cutter.

According to a further preferred embodiment, said step of creating said recess in said honeycomb core having said depth that is at least equal to said maximum depth of said deterioration of said honeycomb core comprises creating said recess in said honeycomb core such that said depth is maximally equal to said associated core height of said honeycomb core.

According to a further preferred embodiment, said repair opening comprises a circular, circular section or oval cross section.

According to a further preferred embodiment, said repair cavity comprises a circular, circular section or oval cross section.

The present invention further provides a repair patch for repairing a sandwich component having a honeycomb core with an associated core height, which is arranged between a first cover plate and a second cover plate, said sandwich component comprising a repair opening with a first maximum diameter provided in said first cover plate and a repair cavity having a second maximum diameter which is greater than said first maximum diameter and provided in said honeycomb core in the region of said repair opening. Said repair patch is introducible into said repair cavity through said repair opening and comprising a third maximum diameter that is maximally equal to said second maximum diameter. Said repair patch further comprises a through opening having a fourth maximum diameter that is smaller than said first maximum diameter.

The inventive repair patch can easily and quickly be introduced into the interior of the sandwich component, i.e. into the area of the honeycomb core. Thus, a thickening or swelling of the sandwich component on its outer face sides due to arrangement of the inventive repair patch on the outside of the sandwich component can be avoided.

Furthermore, the repair patch can be introduced into the sandwich component starting from its damaged upper cover plate. Thus, a required repositioning of the sandwich component such as, for instance, removal of the sandwich component from an associated helicopter where the sandwich component implements the cabin floor, can be avoided and, furthermore, the undamaged lower cover plate is not drilled through and, accordingly, kept intact and undamaged.

According to a preferred embodiment, a straight or curved cutout is provided in the repair patch to simplify introduction of said repair patch through said repair opening into said repair cavity of said honeycomb core.

According to a further preferred embodiment, said repair patch comprises a circular, circular section, oval or helical shape.

The present invention moreover provides a repair patch for repairing a sandwich component having a honeycomb core with an associated core height, which is arranged between a first cover plate with a first thickness and a second cover plate, said sandwich component comprising a repair opening with a first maximum diameter provided in said first cover plate. Said repair patch has a thickness equal to said thickness of said first cover plate and a second maximum diameter equal to said first maximum diameter.

Advantageously, such a repair patch can be pre-fabricated for various given diameters. Thus, a time-consuming application-specific fabrication of a repair patch on a case-to-case basis can be avoided and, instead, a serial and application-independent manufacture can be envisaged.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a top view and a sectional view of a sandwich component with a damaged area according to an embodiment of the invention,
- Figure 2 shows the sandwich component of Figure 1 with a repair opening and an initial recess,
- Figure 3 shows the sandwich component of Figure 2 with a repair cavity,
- Figure 4 shows the sandwich component of Figure 3 with an associated doubler patch that is introduced into the repair cavity,
- Figure 5 shows the sandwich component of Figure 4 with the associated doubler patch mounted thereto,
- Figure 6 shows the sandwich component of Figure 5 with a suitable filling material that fills out the repair cavity,
- Figure 7 shows the sandwich component of Figure 6 with a filler patch that closes the repair cavity,
- Figure 8 shows the sandwich component of Figure 1 with oval doubler and filler patches,
- Figure 9 shows the sandwich component of Figure 1 with doubler patches that are provided with associated cutouts, and
- Figure 10 shows an alternative doubler patch with a helical shape.

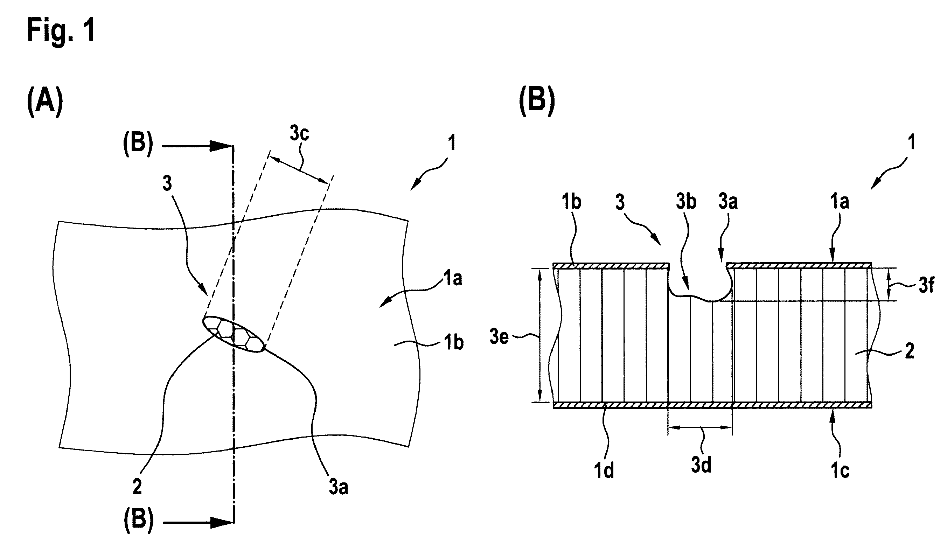

Figure 1 shows a schematic top view and a schematic sectional view of a sandwich component 1 according to the invention. The top view is designated as part (A) and the sectional view as part (B) of Figure 1, said sectional view representing a cross section of the sandwich component 1 according to the top view and seen in direction of arrows (B) - (B) indicated in the top view.

The sandwich component 1 is preferably adapted for implementing a cabin floor of an aircraft and, more specifically, of a rotary wing aircraft such as a helicopter. According to an embodiment, the sandwich component 1 comprises at least a honeycomb core 2 with an associated core height 3e, which is arranged between a first cover plate 1 b and a second cover plate 1 d. The honeycomb core 2 e.g. comprises paper that is impregnated with synthetic resin and the first and second cover plates 1b, 1d e.g. comprise metal or a metal alloy.

It should be noted that the honeycomb core 2 is only illustrated schematically in Figure 1 and the following figures. However, the constitution of such a honeycomb core is well-known to the person skilled in the art, so that a more detailed illustration and description of the honeycomb core 2 can be avoided for simplicity of the drawings and brevity of the description.

Assuming that the first cover plate 1 b defines a user-accessible part of the sandwich component 1 when the sandwich component 1 is used to implement a cabin floor, the first cover plate 1 b defines an accessible upper component side 1 a and represents, accordingly, an accessible upper cover plate. Consequently, the lower cover plate 1 d defines an inaccessible lower component side 1 c that is e.g. attached to an associated fuselage and represents, thus, an inaccessible lower cover plate. Therefore, the first cover plate 1 b is also referred to as the "upper cover plate 1b" hereinafter and the second cover plate 1 d is also referred to as the "lower cover plate 1 d" hereinafter, for clarity and simplicity.

According to an embodiment, the sandwich component 1 comprises a damaged area 3 that includes at least a cover plate crack 3a of the upper cover plate 1 b and a deterioration 3b of the honeycomb core 2 adjacent to the cover plate crack 3a. The cover plate crack 3a illustratively comprises a maximum crack diameter 3c. The honeycomb core deterioration 3b illustratively comprises a maximum deterioration diameter 3d and a maximum deterioration depth 3f. The maximum deterioration diameter 3d may be, and is by way of example, greater than the maximum crack diameter 3c.

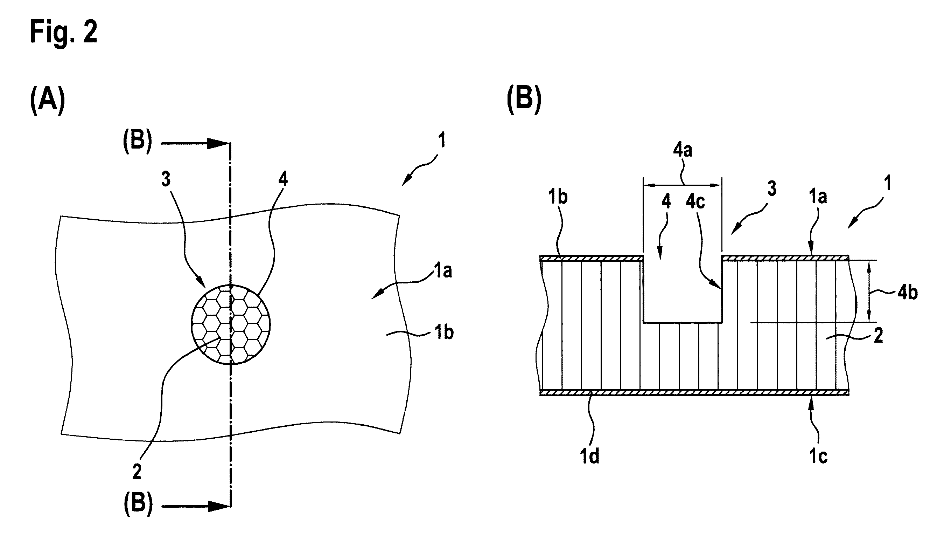

In the following, a repair method for repairing the damaged area 3 of the sandwich component 1 according to one embodiment of the invention is described with reference to Figure 2 to Figure 7, which illustrate different steps of the repair method. Each one of Figure 2 to Figure 7 respectively shows a schematic top view and a schematic sectional view of the sandwich component 1 of Figure 1 that illustrates a step of the inventive repair method and, thus, a given stage of the repair method, wherein in analogy to Figure 1 the top view is designated as part (A) and the sectional view as part (B), respectively.

Figure 2 illustrates an initial step of the inventive repair method, which is carried out starting from the upper component side 1 a of the sandwich component 1. In this initial step, a repair opening 4 is created in the upper cover plate 1 b, e.g. by boring using a suitable drill. The repair opening 4 is preferably created with an associated maximum repair opening diameter 4a that is at least equal to the maximum crack diameter 3c associated with the cover plate crack 3a in the upper cover plate 1 b, so that there is no more cracked area in the upper cover plate 1 b. By way of example, the repair opening 4 has a circular cross section. However, other cross sections with e.g. circular section shape or oval shape can alternatively be implemented. Likewise, polygonal cross sections or any other cross section are also contemplated.

Furthermore, an initial recess 4c is created in the honeycomb core 2, preferentially in prolongation to the repair opening 4. This initial recess 4c can be created as part of the initial method step or in a subsequent method step. Preferably, the initial recess 4c is created with the maximum repair opening diameter 4a, e.g. by boring using a suitable drill and, more specifically, by boring using the same drill than for boring the repair opening 4.

According to one aspect, the initial recess 4c is created with a depth 4b that is maximally equal to the associated core height 3e of the honeycomb core 2 and, preferably, at least equal to the maximum deterioration depth 3f of the deterioration 3b of the honeycomb core 2. However, the depth 4b can also be less than the maximum deterioration depth 3f as long as a suitable broaching tool, such as a milling cutter, can be introduced through the repair opening 4 into the initial recess 4c.

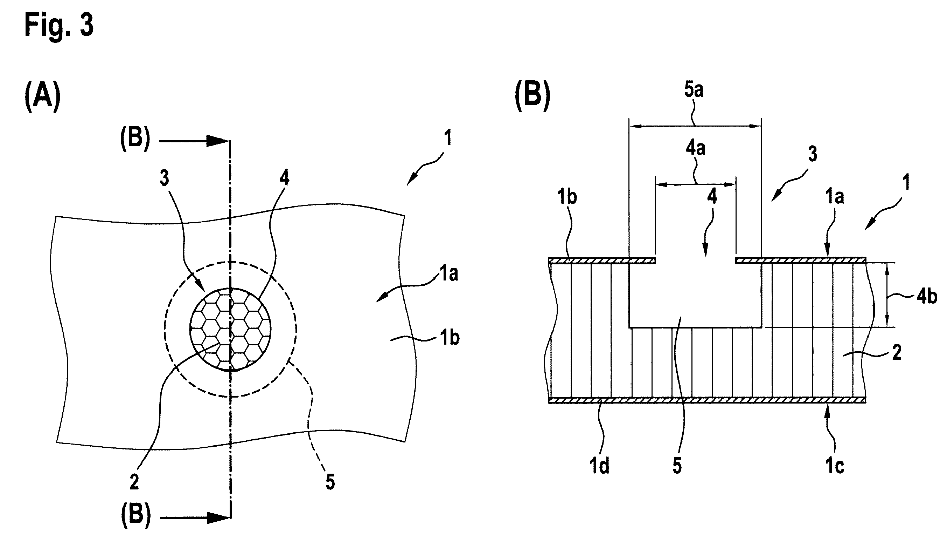

Figure 3 illustrates a subsequent step of the inventive repair method, which is also carried out starting from the upper component side 1a of the sandwich component 1. In this subsequent step, the initial recess 4c of Figure 2 is enlarged in the honeycomb core 2 for creating a repair cavity 5 by undercutting the honeycomb core 2 in the region of the repair opening 4.

Preferably, this repair cavity 5 is created with a maximum repair cavity diameter 5a that is greater than the maximum repair opening diameter 4a. According to one embodiment, the repair cavity 5 is created by milling using a suitable milling cutter. By way of example, the repair cavity 5 has a circular cross section. However, other cross sections with e.g. circular section shape or oval shape can alternatively be implemented. Likewise, polygonal cross sections or any other cross section are also contemplated.

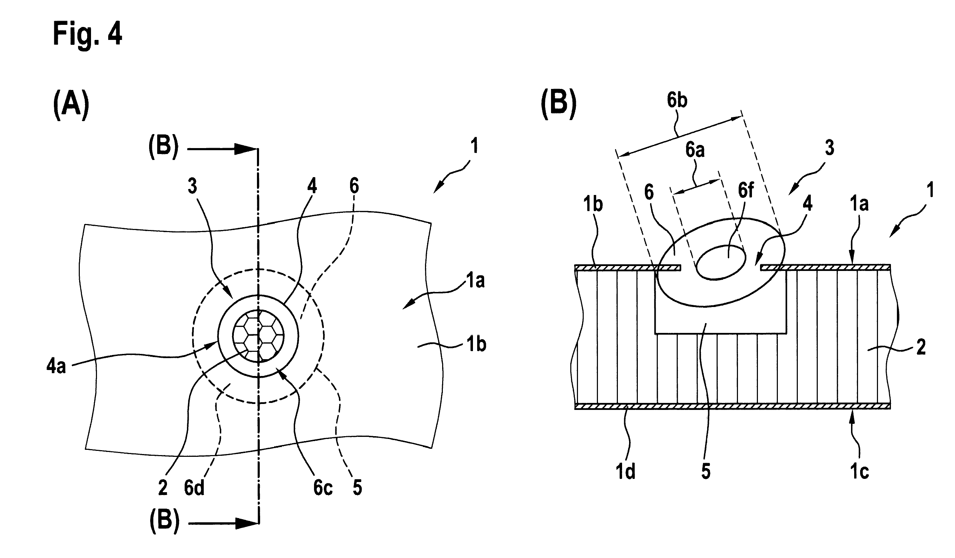

Figure 4 illustrates a subsequent step of the inventive repair method, which is also carried out starting from the upper component side 1 a of the sandwich component 1. In this subsequent step, a first repair patch 6 is introduced through the repair opening 4 into the repair cavity 5. However, according to one aspect any existing adhesive residues in the region of the repair cavity 5 and the repair opening 4 are removed prior to introducing this first repair patch 6 through the repair opening 4 into the repair cavity 5.

Preferably, the first repair patch 6 is embodied as a doubler patch and, therefore, also referred to as the "doubler patch 6" hereinafter. This doubler patch 6 preferentially comprises metal or a metal alloy and has a maximum outer doubler patch diameter 6b that is at least greater than the repair opening diameter 4a. By providing the doubler patch 6 with the maximum outer doubler patch diameter 6b that is at least greater than the repair opening diameter 4a, a doubler patch gluing area 6d can be provided.

According to one embodiment, the doubler patch 6 has a plate-like circular shape with an inner through opening 6f which is usable as a filling material insertion opening. This inner through opening 6f preferably defines a maximum inner doubler patch diameter 6a that is smaller than the repair opening diameter 4a. By providing the doubler patch 6 with the maximum inner doubler patch diameter 6a that is smaller than the repair opening diameter 4a, a doubler patch connection area 6c can be provided.

It should, however, be noted that the doubler patch 6 with the plate-like circular shape and the single inner through opening 6f is only described by way of example and not for limiting the invention accordingly. Instead, various different shapes and/or implementations with more than one inner through opening can be provided. For instance, doubler patches with e.g. a circular section shape or an oval shape with one or more inner through openings can alternatively be implemented. Likewise, polygonal shapes or any other shape are also contemplated. However, a respectively selected shape can be application-specific. For instance, when the damaged area 3 is close to an anchor point, the selected shape may depend on the proximity to the anchor point, so that the doubler patch 6 can e.g. only be realized with a circular section shape or U-shaped cross section, and so on.

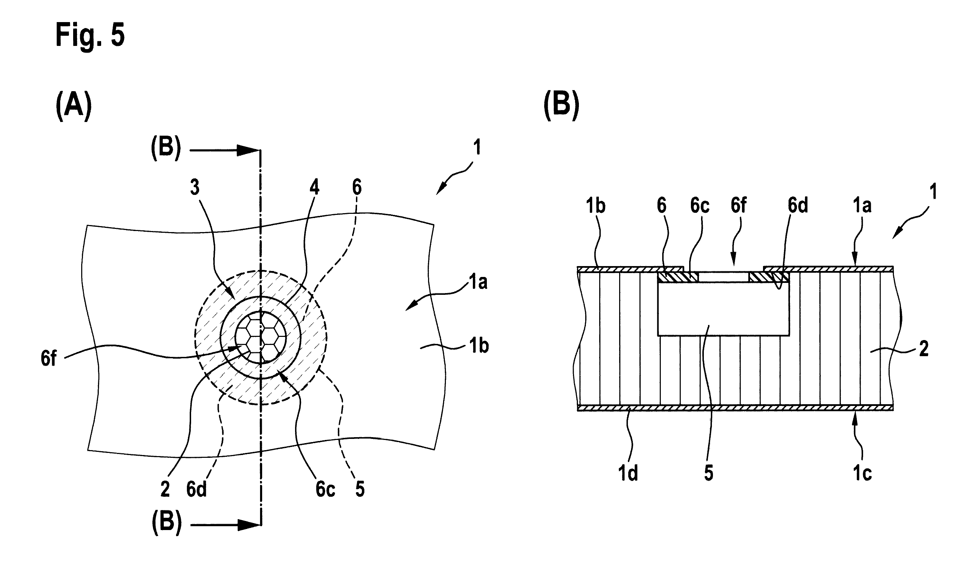

Figure 5 illustrates a subsequent step of the inventive repair method, which is also carried out starting from the upper component side 1a of the sandwich component 1. In this subsequent step, the doubler patch 6 is attached inside the repair cavity 5 in the region of the repair opening 4 to the first cover plate 1 b, such that the doubler patch 6 closes the repair opening 4 at least partly.

Preferably, the doubler patch gluing area 6d is glued to the doubler patch 6. Therefore, a given difference in diameter between the maximum outer doubler patch diameter 6b and the repair opening diameter 4a is preferentially chosen such that the doubler patch gluing area 6d allows creation of a gluing zone with sufficient load capacity, so that the doubler patch 6 can securely and reliably be glued to the upper cover plate 1 b.

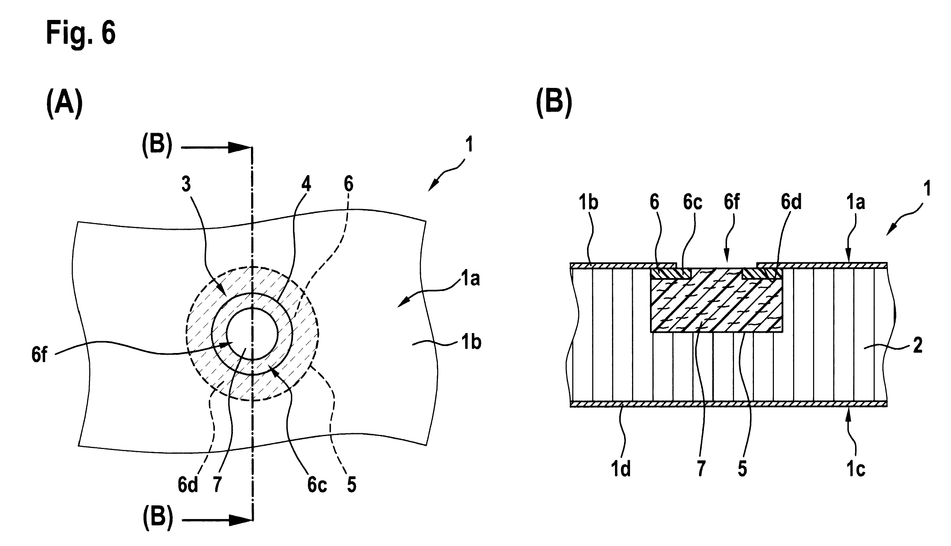

Figure 6 illustrates a subsequent step of the inventive repair method, which is also carried out starting from the upper component side 1a of the sandwich component 1. In this subsequent step, the repair cavity 5 is filled out with a filling material 7.

It should be noted that any suitable core-filling compound can be used as filling material, such as e.g. epoxy fillers. However, the invention is not limited to such well-known core-filling compounds and may also be adapted to other core-filling compounds.

According to one embodiment, the filling material 7 is introduced through the inner through opening 6f provided in the doubler patch 6 into the repair cavity 5. In the case where the inner through opening 6f is provided as a single opening, this single opening simultaneously serves as a filler hole and as a vent hole. In cases, where more than one inner through opening is provided, one or more of these openings can be used as filler holes while one or more others of these openings can be used as vent holes.

Preferably, the repair cavity 5 is filled out such that the inner through opening 6f is also filled out with the filling material 7. However, any of the filling material 7 that projects from the doubler patch 6 in the direction of the upper cover plate 1 b must be removed prior to the subsequent step of the inventive repair method.

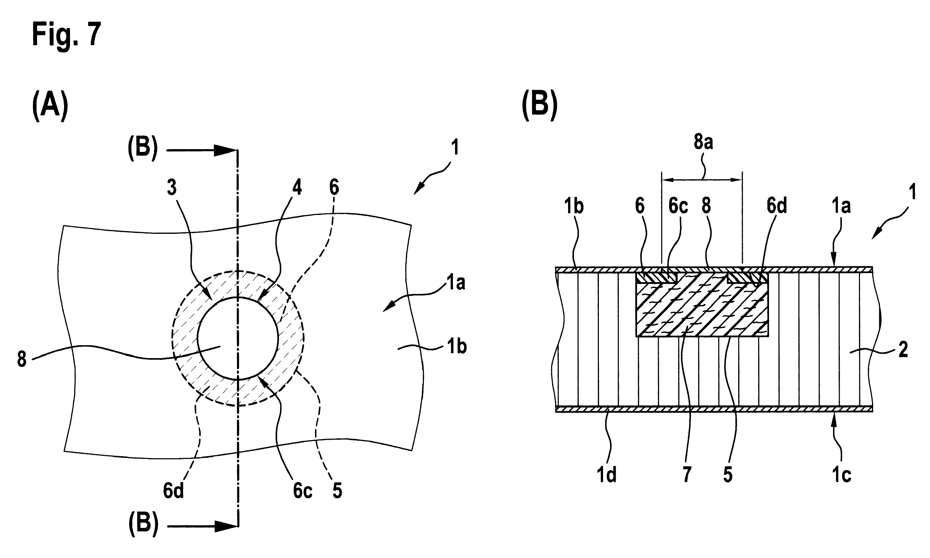

Figure 7 illustrates a subsequent step of the inventive repair method, which is also carried out starting from the upper component side 1a of the sandwich component 1. In this subsequent step, a second repair patch 8 is arranged in the repair opening 4 and attached to the doubler patch 6.

Preferably, the second repair patch 8 is embodied as a filler patch and, therefore, also referred to as the "filler patch 8" hereinafter. This filler patch 8 preferentially comprises metal or a metal alloy and has a maximum filler patch diameter 8a that corresponds at least substantially to the repair opening diameter 4a. By providing the filler patch 8 with the maximum filler patch diameter 8a that corresponds at least substantially to the repair opening diameter 4a, the filler patch 8 can be fitted exactly to the repair opening 4. Furthermore, the filler patch 8 preferably comprises a thickness that is at least substantially equal to an underlying thickness of the first cover plate 1 b so that no thickening or swelling of the sandwich component 1 occurs when the filler patch 8 is attached to the doubler patch 6.

According to one embodiment, the filler patch 8 has a plate-like circular shape. It should, however, be noted that the filler patch 8 with the plate-like circular shape is only described by way of example and not for limiting the invention accordingly. Instead, various different shapes and/or implementations can be provided as long as the shapes correspond at least substantially to an underlying shape of the repair opening 4. For instance, filler patches with e.g. an oval shape, polygonal shapes or any other shape are also contemplated.

Preferably, the filler patch 8 is glued to the doubler patch 6 and, more specifically, to the doubler patch connection area 6c. Therefore, the doubler patch connection area 6c is embodied such that it allows creation of a gluing zone with sufficient load capacity, so that the filler patch 8 can securely and reliably be glued to the doubler patch 6.

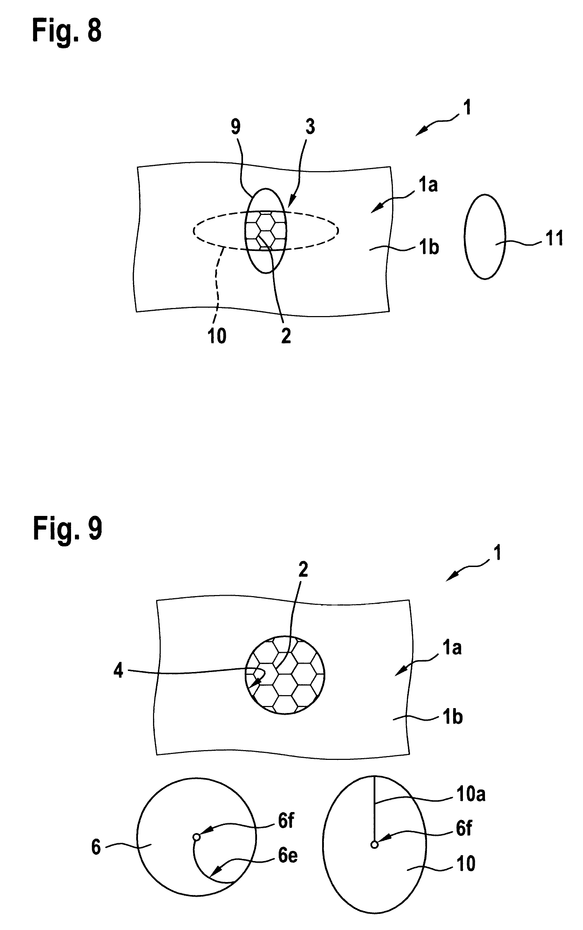

Figure 8 shows the sandwich component 1 of Figure 1 with a repair opening 9 in the upper cover plate 1 b, which has according to an alternative embodiment an oval cross section. This oval repair opening 9 can be closed by means of an oval filler patch 11, which is e.g. doubled by an oval doubler patch 10.

It should, however, be noted that Figure 8 is only intended to illustrate an exemplary shape that differs from a circular shape and that can, likewise, be used to implement the inventive repair patches. Again, it should be noted that also other shapes than circular or oval shapes can be realized.

Figure 9 shows the sandwich component 1 of Figure 1 with the circular doubler patch 6 of Figure 4 and the oval doubler patch 10 of Figure 8. Both doubler patches are provided with the inner through opening 6f, which is illustratively only provided as a comparatively small hole.

However, according to one embodiment the circular doubler patch 6 is provided with a curved cutout 6e and the oval doubler patch 10 is provided with a straight cutout 10a. Such straight and curved cutouts 10a, 6e are provided to simplify introduction of the doubler patches 10, 6 through the repair opening 4 created in the upper cover plate 1 b into the repair cavity 5 of the honeycomb core 2, as illustrated in Figure 4.

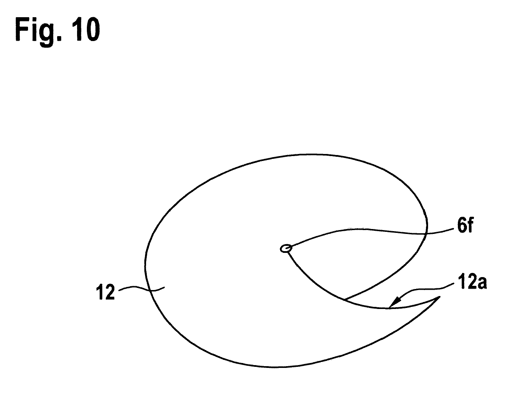

Figure 10 shows a doubler patch 12 that is implemented according to still a further embodiment. As mentioned above, the doubler patch can generally be provided with a circular shape, a circular section shape, an oval shape, a polygonal shape or,any other shape. In order to illustrate such another shape, the doubler patch 12 is provided with a helical shape and a helical cutout 12a that is configured to simplify introduction of the doubler patch 12 through the repair opening 4 created in the upper cover plate 1 b into the repair cavity 5 of the honeycomb core 2 according to Figure 4.

It should be noted that further modifications are also within the common knowledge of the person skilled in the art and, thus, also considered as being part of the present invention. For instance, the inventive doubler patches and the upper cover plate can be provided with fitting holes to allow a fixation of the doubler patches to the upper cover plate by means of bolting or screwing. Accordingly, an at least substantially constant contact pressure between the doubler patches and the upper cover plate can be provided during gluing and, furthermore, suitable bolting or screwing connections can be used to allow for an improved conduction of shear forces occurring in operation in the upper cover plate in the region of the doubler patches. Similarly, the inventive filler patches may likewise be bolted or screwed to the inventive doubler patches.

According to other possible variations, the inventive doubler patches can be attached to the upper cover plate e.g. by means of vacuum or magnetic forces, as long as the filling material introduced into the repair cavity is not completely hardened. Subsequently, the filling material keeps the doubler patches in position.

Still according to other possible variations, a distance fabric can be arranged at least partly between the inventive doubler patches and the upper cover plate. Accordingly, a predefined gluing gap of e.g. 0,05 mm to 1,5 mm can be guaranteed between the inventive doubler patches and the upper cover plate.

### Reference List

- 1: sandwich component
- 1a: upper component side
- 1b: upper cover plate
- 1c: lower component side
- 1d: lower cover plate
- 2: honeycomb core
- 3: damaged area
- 3a: upper cover plate crack
- 3b: honeycomb core deterioration
- 3c: maximum plate crack diameter
- 3d: maximum core deterioration diameter
- 3e: honeycomb core height
- 3f: maximum core deterioration depth
- 4: circular upper cover plate repair opening
- 4a: repair opening diameter
- 4b: initial recess depth
- 4c: initial recess
- 5: cylindrical honeycomb core repair cavity
- 5a: repair cavity diameter
- 6: circular inner repair patch
- 6a: inner repair patch inner diameter
- 6b: inner repair patch outer diameter
- 6c: inner repair patch connection area
- 6d: inner repair patch gluing area
- 6e: curved cutout
- 6f: filling material insertion opening
- 7: filling material
- 8: circular outer repair patch
- 8a: outer repair patch diameter
- 9: oval upper cover plate repair opening
- 10: oval inner repair patch
- 10a: linear cutout
- 11: oval outer repair patch
- 12: helical inner repair patch
- 12a: helical cutout

## Claims

1. A method of repairing a sandwich component (1) having a honeycomb core (2) with an associated core height (3e), which is arranged between a first.cover plate (1b) and a second cover plate (1d), said sandwich component (1) comprising a damaged area (3) including a cover plate crack (3a) of the first cover plate (1 b) and a deterioration (3b) of said honeycomb core (2) adjacent to said cover plate crack (3a), said method comprising at least the steps of:
- Creating a repair opening (4) in said first cover plate (1 b) with a first maximum diameter (4a) that is at least equal to a second maximum diameter (3c) associated with said cover plate crack (3a),
- Creating a recess (4c) in said honeycomb core (3) in prolongation to said repair opening (4), said recess (4c) having said first maximum diameter (4a) and a depth (4b) that is at least equal to a maximum depth (3f) of said deterioration (3b) of said honeycomb core (2),
- Enlarging said recess (4c) in said honeycomb core (2) for creating a repair cavity (5) with a third maximum diameter (5a) that is greater than said first maximum diameter (4a),
- Introducing a first repair patch (6) through said repair opening (4) into said repair cavity (5), said first repair patch (6) having a fourth maximum diameter (6b) that is at least greater than the first maximum diameter (4a), and
- Attaching said first repair patch (6) inside said repair cavity (5) in the region of said repair opening (4) to said first cover plate (1 b), such that said first repair patch (6) closes said repair opening (4) at least partly.

2. The method according to claim 1,
further comprising the step of introducing a filling material (7) through a through opening (6f) provided in said first repair patch (6) into said repair cavity (5), said through opening (6f) having a fifth maximum diameter (6a) that is smaller than said first maximum diameter (4a).

3. The method according to claim 2,
further comprising the step of arranging a second repair patch (8) having a sixth maximum diameter (8a) that corresponds to the first maximum diameter (4a) in said repair opening (4), and attaching said second repair patch (8) at least to said first repair patch (6).

4. The method according to claim 3,
further comprising the step of removing any existing adhesive residues in the region of said repair opening (4) and said repair cavity (5) prior to introducing said first repair patch (6) through said repair opening (4) into said repair cavity (5).

5. The method according to claim 3,
**characterized in that** said step of attaching said first repair patch (6) inside said repair cavity (5) in the region of said repair opening (4) to said first cover plate (1b) comprises gluing said first repair patch (6) to said first cover plate (1 b).

6. The method according to claim 3,
**characterized in that** said step of attaching said second repair patch (8) at least to said first repair patch (6) comprises gluing said second repair patch (8) at least partly to said first repair patch (6).

7. The method according to claim 3,
**characterized in that** said steps of creating said repair opening (4) in said first cover plate (1 b) with said first maximum diameter (4a) and creating said recess (4c) in said honeycomb core (2) in prolongation to said repair opening (4) are performed by boring said repair opening (4) and said recess (4c) using a drill.

8. The method according to claim 3,
**characterized in that** said step of enlarging said recess (4c) in said honeycomb core (2) for creating said repair cavity (5) comprises milling said repair cavity (5) using a milling cutter.

9. The method according to claim 3,
**characterized in that** said step of creating said recess (4c) in said honeycomb core (2) having said depth (4b) that is at least equal to said maximum depth (3f) of said deterioration (3b) of said honeycomb core (2) comprises creating said recess (4c) in said honeycomb core (2) such that said depth (4b) is maximally equal to said associated core height (3e) of said honeycomb core (2).

10. The method according to claim 3,
**characterized in that** said repair opening (4) comprises a circular, circular section or oval cross section.

11. The method according to claim 3,
**characterized in that** said repair cavity (5) comprises a circular, circular section or oval cross section.

12. A repair patch (6) for repairing a sandwich component (1) having a honeycomb core (2) with an associated core height (3e), which is arranged between a first cover plate (1 b) and a second cover plate (1d), said sandwich component (1) comprising a repair opening (4) with a first maximum diameter (4a) provided in said first cover plate (1b) and a repair cavity (5) having a second maximum diameter (5a) which is greater than said first maximum diameter (4a) and provided in said honeycomb core (2) in the region of said repair opening (4), said repair patch (6) being introducible into said repair cavity (5) through said repair opening (4) and comprising a third maximum diameter (6b) that is maximally equal to said second maximum diameter (5a), said repair patch (6) further comprising a through opening (6f) having a fourth maximum diameter (6a) that is smaller than said first maximum diameter (4a).

13. The repair patch (6) according to claim 12,
**characterized in that** a straight or curved cutout (10a, 6e) is provided to simplify introduction of said repair patch (6) through said repair opening (4) into said repair cavity (5) of said honeycomb core (2).

14. The repair patch (6) according to claim 12,
**characterized by** a circular, circular section, oval or helical shape.

15. A repair patch (8) for repairing a sandwich component (1) having a honeycomb core (2) with an associated core height (3e), which is arranged between a first cover plate (1 b) with a first thickness and a second cover plate (1 d), said sandwich component (1) comprising a repair opening (4) with a first maximum diameter (4a) provided in said first cover plate (1 b), said repair patch (8) having a thickness equal to said thickness of said first cover plate (1 b) and a second maximum diameter (8a) equal to said first maximum diameter (4a).
